# Europäisches Patentamt

## European Patent Office

## Office européen des brevets

(11) Veröffentlichungsnummer: **0 186 041**
**B1**

(12) # EUROPÄISCHE PATENTSCHRIFT

(45) Veröffentlichungstag der Patentschrift:
**03.05.89**

(51) Int. Cl.⁴: **B23K 9/06**, B23K 9/30

(21) Anmeldenummer: **85115740.4**

(22) Anmeldetag: **10.12.85**

(54) Verfahren und Vorrichtung zur Führung von Lichtbogenschweissköpfen mechanisierter Schweissanlagen.

| | |
|---|---|
| (30) Priorität: **21.12.84 DE 3446960** | (73) Patentinhaber: **Siemens Aktiengesellschaft Berlin und München, Wittelsbacherplatz 2, D-8000 München 2(DE)** |
| (43) Veröffentlichungstag der Anmeldung:<br>**02.07.86 Patentblatt 86/27** | (72) Erfinder: **Gunzelmann, Karl-Heinz, Dipl.-Ing.,<br>Händelstrasse 12, D-8500 Nürnberg(DE)**<br>Erfinder: **Beck, Wolfgang, Friedrich-Bauer-Strasse 25,<br>D-8520 Erlangen(DE)** |
| (45) Bekanntmachung des Hinweises auf die Patenterteilung:<br>**03.05.89 Patentblatt 89/18** | |
| (84) Benannte Vertragsstaaten:<br>**AT DE FR GB IT NL SE** | |
| (56) Entgegenhaltungen:<br>**EP-A- 0 093 811<br>DE-A- 2 645 788<br>FR-A- 2 223 126<br>FR-A- 2 478 508<br>GB-A- 2 090 434** | |

ACTORUM AG

**Beschreibung**

Die Erfindung bezieht sich auf ein Verfahren zur Führung von Lichtbogenschweißköpfen mechanisierter Schweißanlagen, bei denen der Schweißkopf während des Schweißens von einer Pendelfunktion gesteuerte Bewegungen quer zur Schweißnaht ausführt und in seiner Höhen- und Seitenlage relativ zur Schweißnaht einstellbar ist, wobei die augenblickliche Höhen- und Seitenposition des Schweißkopfes in Abhängigkeit von aus Schweißstrom und/oder Schweißspannung hergeleiteten Regelgrössen nachführbar sind. Daneben bezieht sich die Erfindung auch auf die zugehörige Vorrichtung zur Durchführung des Verfahrens, mit einem Antrieb für den Schweißkopf und zugehörigen Stell- und Regelgliedern, die eine Höhenverschiebung des Schweißkopfes einerseits und dessen Querverschiebung in bezug auf die Schweißnaht andererseits bewirken, wobei eine Signalaufbereitungs- und -auswerteeinheit vorhanden ist, die wenigstens einen Eingang für Schweißstrom und/oder -spannung und Ausgänge für Steuersignale für einen Höhenmotor einerseits sowie einen Seitenmotor des Schweißkopfes andererseits aufweist.

In der Schweißtechnik wird seit einiger Zeit angestrebt, das Schweißen von Werkstücken automatisiert, d.h. beispielsweise unter Einsatz von Robotern, durchzuführen. Dafür sind geeignete Betriebsmittel und Verfahren zur Steuerung dieser Betriebsmittel notwendig. Angestrebt wird dabei eine selbständige Höhen- und Seiten-Nachführung des Schweißkopfes entlang einer Schweißnahtfuge, die von einer vorgegebenen Bahn abweicht, wobei die Schweißnahtfuge beispielsweise einen V- oder U-förmigen Querschnitt haben kann.

Es ist bereits bekannt, beim Lichtbogenschweißen den sich zwischen Werkstück und Schweißkopf ausbildenden Lichtbogen als Sensor zum automatischen Nachführen des Schweißkopfes entlang einer Nahtfuge zu verwenden. Hierzu sind entsprechende Betriebssysteme auf dem Markt.

Insbesondere für das MIG/MAG (Metall-inertgas/Metallaktivgas)-Schweißen wird bereits vorgeschlagen, die Schweißstromänderungen aus dem Lichtbogen bei quer zur Schweißrichtung mechanisch oder magnetisch pendelndem Lichtbogen für die Höhen- und Seitennachführung des Schweißkopfes auszuwerten. Die bekannten Systeme sind jedoch mit Problemen im sogenannten Kurzlichtbogen- und auch im sogenannten Langlichtbogenbereich behaftet; beim sogenannten Impulslichtbogenverfahren sind die bekannten Systeme sogar unbrauchbar. Für das WIG (Wolframinertgas)-Schweißen sind derartige Systeme nicht vorgesehen, weil dort im allgemeinen mit eingeprägtem Konstantstrom gearbeitet wird.

Aus der DE-C 3 010 422 (FR-A 2 478 508) ist bereits ein Verfahren der eingangs genannten Art bekannt, bei dem im Fugenflankenbereich die Höhenposition des Schweißbrenners konstant gehalten wird und bei dem zur Bestimmung des Zeitpunktes der Umsteuerung des Schweißkopfes der Mittelwert des ISI-Stromes bzw. der IST-Spannung nach der Zeit differenziert wird, wobei dieser Wert mit einem vorgegebenen Sollwert verglichen wird. Hierfür ist eine elektronische Steueranlage vorgesehen, die Signaleingänge für Schweißstrom und/oder Spannung und Ausgänge für einen Höhenmotor einerseits und einen Seitenmotor andererseits aufweist. Es wird dort bereits auch Bezug genommen aus das in der DE-A 2 645 788 beschriebene Verfahren zur Führung eines Schweißbrenners, bei dem die Höhenabtastung und die Erfassung der Fugenflanke zeitlich voneinander getrennt erfolgt. Speziell dieses Verfahren arbeitet mit einer fest eingestellten Pendelamplitude, wobei aus dem Vergleich der Stromwerte an einander gegenüberliegenden Umkehrpunkten die Seitenführung des Brenners errechnet wird.

Die bekannten Verfahren lassen sich nur für Spezialfälle einsetzen und zeigen bei einem universellen Betrieb verschiedene Mängel. Damit ist aber die Anwendbarkeit der bekannten Systeme eingeschränkt, da sie nicht im gesamten Bereich der anwendungstechnisch relevanten Schweißparameter, wie Schweißstrom und/oder Spannung sowie vorgebbare Impulsverhältnisse, arbeiten.

Aufgabe der Erfindung ist es daher, Verfahren zur Führung von Lichtbogenschweißköpfen mechanisierter Schweißanlagen und eine zugehörige Vorrichtung anzugeben, welche für die verschiedenen Lichtbogenschweißverfahren verwendbar sind und sich insbesondere auch im Impulslichtbogenbetrieb bewähren.

Die Aufgabe ist bei einem Verfahren der eingangs genannten Art dadurch gelöst, daß die Werte von Schweißstrom und/oder Schweißspannung in vorgebbaren, dem Strom und/oder der Spannung zugeordneten Zeitfenstern erfaßt werden, wobei die Zeitfenster um den Wert der Phasenverschiebung des Strom- und/oder Spannungssignals gegenüber der mechanischen Pendelfunktion des Schweißkopfes versetzt sind. Dabei dient vorzugsweise ein erstes Zeitfenster zur Ermittlung einer Stellgröße für die Höhenverschiebung des Schweißkopfes und ein zweites Zeitfenster zur Ermittlung einer Stellgröße für die Querverschiebung des Schweißkopfes.

Bei der zugehörigen Vorrichtung zur Durchführung des Verfahrens mit einem Schweißkopf und zugehörigen Stell- und Regelgliedern, die eine Höhenverschiebung des Schweißkopfes einerseits und dessen Seitenverschiebung quer zur Schweißnaht andererseits bewirken, wobei eine Signalaufbereitungs- und -auswerteeinheit wenigstens einen Eingang für Schweißstrom und Ausgänge für Steuersignale für den Höhenmotor einerseits sowie den Seitenmotor andererseits aufweist, sind der Signalaufbereitungs- und -auswerteeinheit Mittel zur Erkennung der Phasenverschiebung von Schweißstrom und/oder -spannung gegenüber der mechanischen Pendelfunktion zwecks Vorgabe von Zeitfenstern für die Erfassung von Schweißstrom und/oder Schweißspannung zugeordnet. Es kann ein zweiter Eingang für das Signal der mechanischen Pendelfunktion zu deren Vorzeichenerkennung vorhanden sein. Alternativ kann die Signalaufbereitungs- und -auswerteeinheit selbst Mittel zur Erzeugung der Pendelfunktion aufweisen. Die Signalaufbereitungs- und -auswerteeinheit umfaßt dabei Speicher und Vergleichsglieder und enthält vorzugsweise einen Mikroprozessor.

Beim erfindungsgemäßen Verfahren kann mit konstanter Pendelbreite und -geschwindigkeit sowie konstanten Verweilzeiten an den Umkehrpunkten des Schweißkopfes gearbeitet werden, so daß von einer stabilen Pendelfunktion quer zur Nahtfuge ausgegangen werden kann. Es kann aber auch die Pendelfunktion durch Auswertung der Strom- und/oder Spannungssignale selbsttätig an die aktuelle Fugenbreite der Schweißnaht angepaßt werden. In jedem Fall bewirkt das Pendeln über der Fuge eine periodische Lichtbogen-Längenänderung und damit bei nahezu konstanter Quellenspannung eine periodische Stromänderung. Berücksichtigt wird nun aber, daß bei den periodischen Schweißstromänderungen gegenüber der mechanischen Pendellage des Schweißkopfes eine Phasenverschiebung auftreten kann. Diese Phasenverschiebung wird bei der Erfindung zur Ableitung der Regelgrößen erstmalig mit einbezogen.

Der Erfindung lag speziell die Erkenntnis zugrunde, daß insbesondere bei niedrigen Schweißströmen die Phasenverschiebung zwischen Schweißstromänderungen und mechanischer Pendellage überproportional zunimmt, weshalb die bekannten Systeme zum Teil versagen müssen. Auch aus diesem Grunde waren die bisher bekannten Verfahren zum Nachführen des Schweißkopfes beim Impulslichtbogenschweißen nicht befriedigend einsetzbar. Bei der erfindungsgemäßen Vorrichtung arbeitet die Signalaufbereitungs- und -auswerteeinheit mit einer Demodulation der Meßwerte, wodurch auch im Bereich niedriger Schweißströme und insbesondere auch beim Impulslichtbogen auswertbare Signale erzeugt werden. Durch einen einstellbaren Phasenschieber können die Phasenverschiebung zwischen Strom- und/oder Spannungssignal und mechanischer Pendellage kompensiert werden, so daß eine eindeutige Zuordnung des Meßsignals zur Stellung des Schweißkopfes in der Nahtfuge erreicht wird.

Die Erfindung ist ohne weiteres für das MIG/MAG-Schweißen anwendbar, während beim WIG-Impulsschweißen eine zusätzliche Triggerung zwischen Pendel- und Stromsignal zur Erzeugung einer festen Phasenbeziehung erforderlich ist.

Weitere Vorteile und Einzelheiten der Erfindung ergeben sich aus der nachfolgenden Beschreibung von Ausführungsbeispielen anhand der Zeichnung.

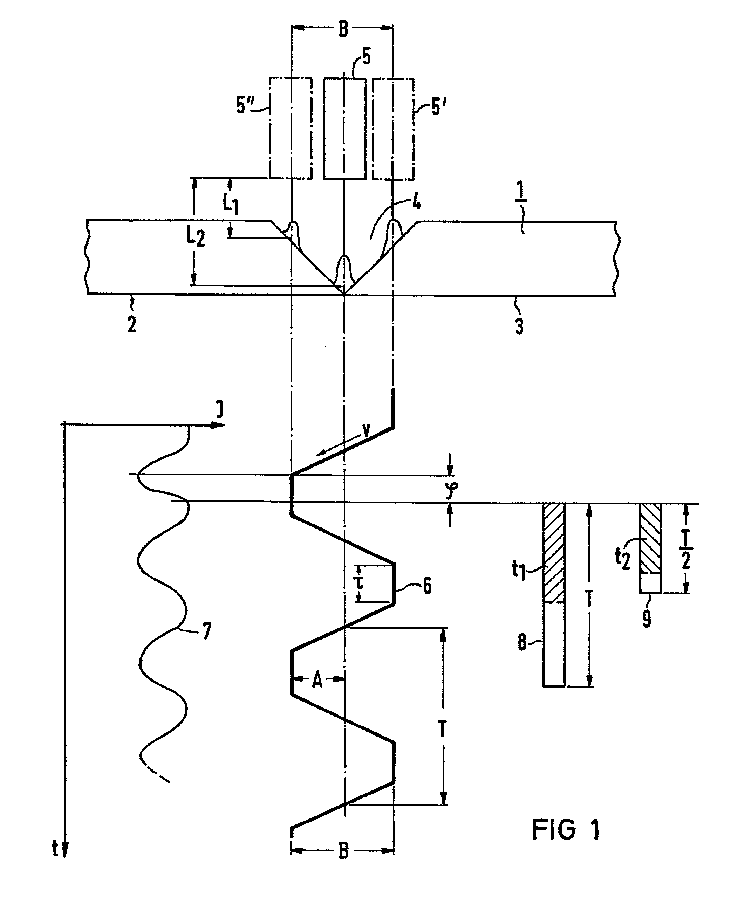

Zwischen den Teilstücken 2 und 3 ist eine Schweißfuge 4 mit V-Profil gebildet. Über der Schweißfuge 4 ist ein Schweißkopf 5 angeordnet, der in Figur 1 in drei verschiedenen Lagen angedeutet ist.

Der Schweißkopf 5 ist in vorgegebener Höhe gegenüber der Schweißfuge angebracht und führt bei vorgegebener Pendelfunktion eine konstante mechanische Pendelbewegung über die Strecke B aus. In der Randlage hat der Schweißkopf einen Höhenabstand $L_1$, in der Mittellage einen Höhenabstand $L_2$ von der Flanke der Schweißfuge 4.

Eine solche Anordnung wird für das Metallschutzgasschweißen mit abschmelzender Elektrode verwendet. Dabei kann hinsichtlich Prozeßführung sowohl mit Kurz-, Lang- und Sprühlichtbogen, aber auch insbesondere im Impulslichtbogenbetrieb, bei dem einem Kurzlichtbogen ein Sprühlichtbogen überlagert ist, gearbeitet werden.

Beim Pendeln um die Fugenmitte mit vorgegebener konstanter Pendelbreite B und -geschwindigkeit v sowie vorgegebenen konstanten Verweilzeiten $\tau$ an den Umkehrpunkten führt der Schweißkopf 5 eine periodische Bahnkurve 6 gemäß einer Trapezfunktion aus, welche die Amplitude A und die Periode T hat. Zugehörige Schweißstrom- bzw. Schweiß-Spannungsfunktionen sind demzufolge ebenfalls im wesentlichen periodisch. Eine solche Meßkurve I = f(t) ist in Fig. 1 mit 7 bezeichnet. Im Rahmen der vorgenommenen Untersuchungen wurde nun aber eine Phasenverschiebung $\varphi$ zwischen der Schweißstromfunktion I = f(t) und der mechanischen Pendelfunktion 6 festgestellt, die so erheblich sein kann, daß ohne deren Berücksichtigung eine Seitenregelung des Schweißkopfes 5 nicht möglich ist.

Beim nunmehr vorgeschlagenen Verfahren werden die Werte von Schweißstrom und/oder Schweißspannung in vorgebbaren Zeitfenstern 8 und 9 erfaßt, die jeweils um den Wert der festgestellten Phasenverschiebung $\varphi$ verschoben sind. Dabei dient ein erstes Zeitfenster 8 zur Ermittlung einer Stellgröße für die Höhenverstellung des Schweißkopfes. Dieses erste Zeitfenster 8 ist ein Intervall der Länge $t_1$, welche höchstens der Pendelperiode T entspricht. In diesem Zeitfenster werden die gemittelten Werte oder der Maximal- bzw. Minimalwert von Schweißstrom und/oder -spannung erfaßt und mit einem vorgegebenen Sollwert verglichen, woraus ein Stellwert zur Höhennachführung ermittelt wird. Das erste Zeitfenster kann auch ein Intervall $t_1$ von erheblich geringerer Länge als der halben Pendelperiode T/2 sein.

Ganz entsprechend dient ein zweites Zeitfenster 9 zur Ermittlung einer Stellgröße für die Querverschiebung des Schweißkopfes. Dieses zweite Zeitfenster 9 ist ein Intervall der Länge $t_2$ von höchstens einer halben Pendelperiode T/2, wobei in diesem Zeitfenster wiederum jeweils die gemittelten Werte oder der Maximalwert bzw. Minimalwert von Schweißstrom und/oder -spannung gemessen werden. In diesem Fall wird der Wert aber mit dem Vorzeichen eines von der betreffenden Pendelfunktion abhängigen Signals korreliert, woraus nach Richtung und Betrag ein Stellgrößensignal für die Querverschiebung des Schweißkopfes 5 erzeugt wird.

Bei der Erfassung der Meßwerte im Signalfenster 8 und 9 mit Länge $t_1$ bzw. $t_2$ empfiehlt es sich, jeweils wenigstens einen der vorangehenden Meßzyklen erhaltenen Werte zwischenzuspeichern und den aktuellen Meßwert mit dem gespeicherten Wert auf Plausibilität zu überprüfen, so daß die Stellgrößen nur bei Vorliegen von wenigstens zwei konsistenten Meßwerten erzeugt wird.

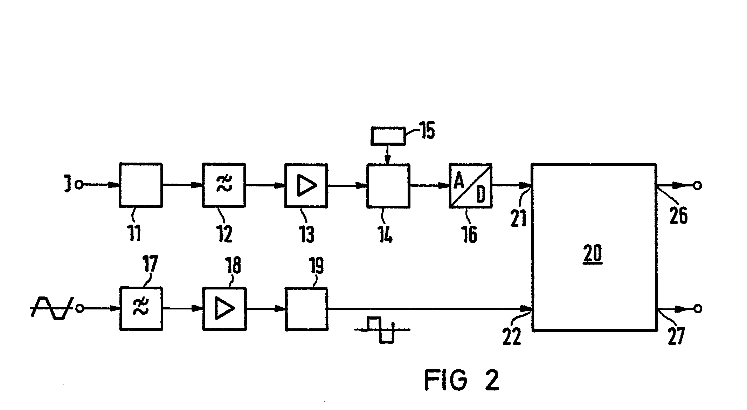

In Figur 2 gelangt das Schweißstromsignal I über eine Eingangseinheit 11 auf ein Filter 12 und von dort über einen Trennverstärker 13 auf eine Einheit 14 zur Bildung einer Sollwert/Istwert-Differenz. Dieser Einheit ist eine Eingabeeinheit 15 für die Sollwerteingabe zugeordnet und ein A/D-Wandler 16 nachgeschaltet. Die Sollwert-Istwertdifferenz des Stromes liegt dann als Digitalsignal vor und gelangt zum ersten Eingang 21 einer Signalaufbereitungs- und -auswerteeinheit 20.

Auf den zweiten Eingang 22 der Signalauswerteeinheit 20 gelangt das Vorzeichensignal der Pendelfrequenz. Dazu wird die Pendelfrequenz über ein Filter 17, einen Trennverstärker 18 auf einen Schwellwertschalter 19 gegeben, von dem ein eindeutiges Vorzeichensignal erzeugt wird.

Als Filter 12 und 17 werden gedämpfte LC-Filter verwendet, die für den vorliegenden Anwendungsfall einen besonders vorteilhaften Frequenzgang aufweisen.

Die Signalauswerteeinheit 20 hat Ausgänge 26 und 27, von denen der eine den (nicht dargestellten) Seitenmotor und der andere den (nicht dargestellten) Höhenmotor des Schweißkopfes ansteuert. Die Ausgänge 26 und 27 liefern also unmittelbar die jeweils aufbereiteten Stellgrößen für die Verstelleinheiten.

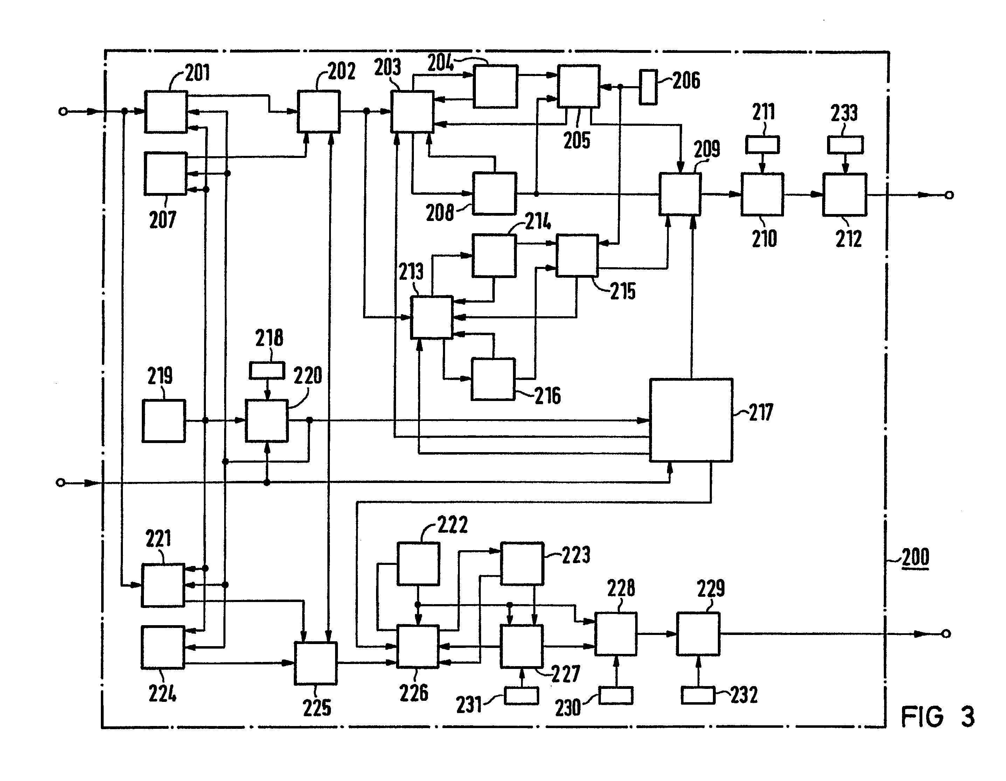

Die Signalaufbereitungs- und -auswerteeinheit 20 kann einen Mikroprozessor umfassen, der weitgehend software-mäßig gesteuert ist. Sie kann aber auch aus einzelnen Schaltgliedern aufgebaut sein. In Figur 3 beinhaltet eine entsprechende Einheit 200 Schaltglieder 201 bis 233, die nachfolgend in ihrem Funktionszusammenhang beschrieben werden:

Von einem Taktgeber 219 gesteuert werden laufend in Addierern 201 und 221 die Soll-Istwert-Abweichungen des Stromes addiert. Die Zahl der Messungen wird in Zählern 207 und 224 gezählt. Beim Vorzeichenwechsel wird eine Verzögerungsstufe 220 gestartet. Diese zählt mit den vom Taktgeber 219 gelieferten Takt, bis der in einer Eingabeeinheit 218 eingestellte Wert für die Phasenverzögerung erreicht ist. Die Einheit 220 steuert die Einheiten 201 und 207 mit jedem nach diesem Zeitintervall abgegebenen Impuls so an, daß aus der Summe der Momentanwerte in der Einheit 201 und dem Zählerstand der Zähler 207 im Mittelwertspeicher 202 der Mittelwert des Stromes für eine Halbwelle der Pendelfrequenz gebildet wird. Dies entspricht dem Maximumwert.

Ein zentrales Koordinierungsnetzwerk 217 liefert für Maximum-Zuordner 203 und 213 die aus den Vorzeichen der Pendelfunktion gewonnene Information, um welches Maximum, d.h. rechtes oder linkes Maximum bezüglich der Schweißnahtfuge, es sich handelt. Dieser Wert gelangt in zugehörige Nennwertspeicher 208 oder 216. In Plausibilitäts-Kontrollstufen 205 oder 215 wird der aktuelle Wert jeweils mit alten, in Speichern 204 oder 214 abgelegten Werten verglichen. Ist die absolute Differenz größer als der in einer Eingabeeinheit 206 eingestellte Wert, so wird die weitere Verarbeitung durch eine Maximumdifferenzstufe 209 verhindert. Erst beim nachfolgenden Maximum der gleichen Seite wird dann von den Einheiten 205 oder 215 entschieden, welches der beiden vorher erfaßten Maxima verwendet wird.

Ist die Differenz zwischen altem und neuem Maximum kleiner als der in der Eingabeeinheit 206 eingestellte Wert, so werden die beiden in den Speichern 208 oder 216 stehenden Werte zur Ermittlung der Stellgröße in der Vergleichseinheit 209 verglichen. Der Absolutwert der Differenz beider Maxima wird in einer Schwellwert-Vergleichsstufe 210 daraufhin untersucht, ob er kleiner als die in einer Eingabeeinheit 211 eingestellte Schwelle ist. Ist letzteres der Fall, so erfolgt keine Ansteuerung eines dem Seitenmotor vorgeschalteten Stellgliedes 212. Ist dagegen die Differenz der Maxima größer als die Schwelle, wird diese zur Aussteuerung des Stellgliedes 212 benutzt, wobei sie noch um einen in einer Eingabeeinheit 233 einstellbaren Faktor verstärkt werden kann. Die so von der Stelleinheit 212 ermittelte Ausgangsgröße dient zur Verstellung des Seitenmotors.

Jeder zweite Impuls der Verzögerungsstufe 220 veranlaßt eine Mittelwertbildung aus den in den Speichen 221 und 224 stehenden Werten in einer nachfolgenden Einheit zur Mittelwertbildung 225. Dieser Mittelwert ist der über eine gesamte Periode der Pendelfrequenz gemessene Strommittelwert, der zur Ermittlung der Stellgrößen weiterverarbeitet wird.

Von der Verzögerungseinheit 220 gesteuert, veranlaßt das zentrale Koordinierungsnetzwerk 217 eine Einheit 226 zur Speicherung des neuen Wertes in der Speichereinheit 222 und einen Plausibilitätsvergleich mit dem in einer Einheit 223 gespeicherten alten Wert und der zulässigen Differenz aus einer Einstelleinheit 231 in der Vergleichseinheit 227. Die Signalverarbeitung erfolgt entsprechend dem beschriebenen Verfahren zur Ermittlung der Maxima. In der Vergleichseinheit 228 erfolgt entsprechend ein Vergleich des Periodenmittelwertes mit einer in einer Eingabeeinheit 230 vorgegebenen Mittelwertschwelle. Ist dieser Wert größer als der vorgesehene Wert, so wird das Signal in einer Multiplikationseinheit 229 mit einer in einer Eingabeeinheit 232 eingestellten Verstärkung multipliziert und zur Ansteuerung des Höhenmotors verwendet.

Bei der beschriebenen Schaltung ist entscheidend, daß mit der Verzögerungseinheit 220 und zugehörigen Eingabeeinheit die Phasenverschiebung exakt eingestellt werden kann. Damit läßt sich das beschriebene Verfahren und die zugehörige Vorrichtung vorteilhaft bei allen Lichtbogenschweißverfahren und insbesondere bei der dabei verwendeten Prozeßführung des Impulslichtbogens anwenden.

In weiteren Ausführungsbeispielen lassen sich in die Signalaufbereitungs- und -verarbeitungseinheit 20 bzw. 200 auch Mittel für eine selbsttätige Erfassung der Phasenverschiebung integrieren. Weiterhin kann von dort auch das Signal für die mechanische Pendelfunktion erzeugt werden, so daß eine spezielle Vorzeichenerkennung nicht notwendig ist. Dabei können Pendelfunktion und Schweißgeschwindigkeit selbsttätig durch Auswertung des Strom- und/oder Spannungssignals an die jeweilige Fugenbreite der Schweißnaht angepaßt werden.

**Patentansprüche**

1. Verfahren zur Führung von Lichtbogenschweißköpfen mechanisierter Schweißanlagen, bei denen der Schweißkopf während des Schweißens von einer Pendelfunktion gesteuerte Bewegungen quer zur Schweißnaht ausführt und in seiner Höhen- und Seitenlage relativ zur Schweißnaht einstellbar ist, wobei die augenblickliche Höhen- und Seitenposition des Schweißkopfes in Abhängigkeit von aus Schweißstrom und/oder Schweißspannung hergeleiteten Regelgrößen nachführbar sind, dadurch gekennzeichnet, daß die Werte von Schweißstrom und/oder Schweißspannung in vorgebbaren, dem Strom und/oder der Spannung zugeordneten Zeitfenstern erfaßt werden, wobei die Zeitfenster um den Wert der Phasenverschiebung ($\varphi$) des Strom- und/oder Spannungssignals gegenüber der mechanischen Pendelfunktion des Schweißkopfes versetzt sind.

2. Verfahren nach Anspruch 1, dadurch gekennzeichnet, daß Pendelfunktion und Schweißgeschwindigkeit konstant vorgegeben werden.

3. Verfahren nach Anspruch 1, dadurch gekennzeichnet, daß Pendelfunktion und Schweißgeschwindigkeit selbsttätig durch Auswertung des Strom- und/oder Spannungssignals an die jeweilige Fugenbreite der Schweißnaht angepaßt werden.

4. Verfahren nach Anspruch 1, dadurch gekennzeichnet, daß ein erstes Zeitfenster zur Ermittlung einer Stellgröße für die Höhenverstellung des Schweißkopfes und ein zweites Zeitfenster zur Ermittlung einer Stellgröße für die Querverschiebung des Schweißkopfes vorgesehen ist.

5. Verfahren nach Anspruch 4, dadurch gekennzeichnet, daß das erste Zeitfenster ein Intervall ($t$) der Länge von höchstens der Pendelperiode ($T$, $t \leq T$) ist und daß der gemittelte Wert, der Maximalwert oder der Minimalwert von Schweißstrom und/oder -spannung mit einem vorgegebenen Sollwert verglichen und zur Ermittlung der Stellgröße für die Höhennachführung verwendet wird.

6. Verfahren nach Anspruch 5, dadurch gekennzeichnet, daß das Zeitfenster ein Intervall ($t$) von erheblich geringerer Länge als die halbe Pendelperiode ($t \leq T/2$) ist.

7. Verfahren nach Anspruch 4, dadurch gekennzeichnet, daß das zweite Zeitfenster ein Intervall ($t$) von höchstens einer halben Pendelperiode ($t \leq T/2$) ist, wobei durch Korrelation des gemittelten Wertes, des Maximalwertes oder des Minimalwertes von Schweißstrom und/oder -spannung mit dem Vorzeichen des von der betreffenden Pendelbewegung abhängigen Signals Richtung und Wert der Stellgröße für die Querverschiebung des Schweißkopfes ermittelt werden.

8. Verfahren nach einem der vorhergehenden Ansprüche, dadurch gekennzeichnet, daß die aktuellen Meßwerte jeweils mit wenigstens einem der vorher erhaltenen und zwischengespeicherten Meßwerte auf Plausibilität überprüft werden und daß eine Stellgröße nur bei Vorliegen von wenigstens zwei konsistenten Meßwerten erzeugt wird.

9. Vorrichtung zur Durchführung des Verfahrens nach Anspruch 1 oder einem der Ansprüche 2 bis 8, mit einem Schweißkopf und zugehörigen Stell- und Regelgliedern, die eine Höhenverschiebung des Schweißkopfes (5) einerseits und dessen Seitenverschiebung quer zur Schweißnaht andererseits bewirken, wobei eine Signalaufbereitungs- und Auswerteeinheit (20) vorhanden ist, die wenigstens einen Eingang (21) für Schweißstrom und/oder -spannung und Ausgänge (26, 27) für Steuersignale für einen Höhenmotor einerseits sowie einen Seitenmotor des Schweißkopfes (5) andererseits aufweist, dadurch gekennzeichnet, daß der Signalaufbereitungs- und -auswerteeinheit (20) Mittel zur Erkennung der Phasenverschiebung ($\varphi$) von Schweißstrom und/oder- spannung gegenüber der mechanischen Pendelfunktion zwecks Vorgabe von Zeitfenstern für die Erfassung von Schweißstrom und/oder Schweißspannung zugeordnet sind.

10. Vorrichtung nach Anspruch 9, dadurch gekennzeichnet, daß die Signalaufbereitungs- und -auswerteeinheit (20) einen Eingang (22) für das Signal der mechanischen Pendelfunktion zu deren Vorzeichenerkennung aufweist.

11. Vorrichtung nach Anspruch 9, dadurch gekennzeichnet, daß die Signalaufbereitungs- und -auswerteeinheit (20) Mittel zur Erzeugung der Pendelfunktion aufweist.

12. Vorrichtung nach Anspruch 9, dadurch gekennzeichnet, daß die Signalaufbereitungs- und -auswerteeinheit (20, 200) Speicher- (204, 208, 214, 216, 223) und Vergleichsglieder (209, 227, 228) umfaßt.

13. Vorrichtung nach Anspruch 9, dadurch gekennzeichnet, daß der Signalaufbereitungs- und -auswerteeinheit (20) Filter (12, 17) und sich daran anschließende Trennverstärker (13, 18) für die Signale von Schweißstrom und/oder -spannung vorgeschaltet sind.

14. Vorrichtung nach Anspruch 13, dadurch gekennzeichnet, daß die Filter (12, 17) LC-Filter sind.

15. Vorrichtung nach Anspruch 9, dadurch gekennzeichnet, daß die Signalaufbereitungs- und -auswerteeinheit (20, 200) einen Mikroprozessor enthält.

**Claims**

1. Process for guiding arc-welding heads of mechanised welding plants in which during the welding procedure the welding head makes movements, controlled by a pendulum function, transversely to the weld seam and is adjustable in its vertical and lateral position relative to the weld seam, wherein the current vertical and lateral position of the welding head may be followed in dependence on controlled variables derived from the welding current and/or the welding voltage, characterised in that the values of the welding current and/or the welding voltage are determined in time windows assigned to the current and/or voltage and determinable in advance, the time windows being staggered by the value of the phase shift ($\varphi$) of the current- and/or voltage signal in relation to the mechanical pendulum function of the welding head.

2. Process according to claim 1, characterised in that the pendulum function and the welding speed are preset to be constant.

3. Process according to claim 1, characterised in that the pendulum function and the welding speed are adapted automatically by evaluation of the current- and/or voltage signal to the particular seam width of the weld seam.

4. Process according to claim 1, characterised in that a first time window is provided for determining a correcting variable for the vertical adjustment of the welding head and a second time window is provided for determining a correcting variable for the transverse displacement of the welding head.

5. Process according to claim 4, characterised in that the first time window is an interval (t) of the length of at most the pendulum swing period $(T, t \leq T)$ and in that the value obtained, the maximum value or the minimum value of the welding current and/or voltage is compared with a specified desired value and is used to determine the correcting variable for the vertical following operation.

6. Process according to claim 5, characterised in that the time window is an interval (t) of considerably less length than half the pendulum swing period $(t \leq T/2)$.

7. Process according to claim 4, characterised in that the second time window is an interval (t) of at most half a pendulum swing period $(t \leq T/2)$, the direction and value of the correcting variable for the transverse displacement of the welding head being obtained by correlation of the value obtained, the maximum value or the minimum value of the welding current and/or voltage with the sign of the signal dependent on the particular pendulum movement.

8. Process according to one of the preceding claims, characterised in that the actual measurement values are checked for plausability in each case with at least one of the measurement values obtained previously and temporarily stored and in that a correcting variable is only produced when there are at least two consistent measurement values available.

9. Appliance for implementing the process according to claim 1 or one of claims 2 to 8, with a welding head and associated correcting and control elements which produce vertical displacement of the welding head (5) on the one hand, and its lateral displacement transversely to the weld seam on the other hand, there being present a signal processing and evaluating unit (20) which has at least one input (21) for the welding current and/or voltage and outputs (26, 27) for control signals for an altitude motor on the one hand, and a lateral motor of the welding head (5) on the other hand, characterised in that to the signal processing and evaluating unit (20) are assigned means for recognising the phase shift ($\varphi$) of the welding current and/or voltage in relation to the mechanical pendulum function to preset the time windows for determining the welding current and/or welding voltage.

10. Appliance according to claim 9, characterised in that the signal processing and evaluating unit (20) has an input (22) for the signal of the mechanical pendulum function for the recognition of its sign.

11. Appliance according to claim 9, characterised in that the signal processing and evaluating unit (20) has means for producing the pendulum function.

12. Appliance according to claim 9, characterised in that the signal processing and evaluating unit (20, 200) comprises storage elements (204, 208, 214, 216, 223) and comparison elements (209, 227, 228).

13. Appliance according to claim 9, characterised in that connected before the signal processing and evaluating unit (20) are filters (12, 17) and isolating amplifiers (13, 18) connected to them for the signals of the welding current and/or voltage.

14. Appliance according to claim 13, characterised in that the filters (12, 17) are LC-filters.

15. Appliance according to claim 9, characterised in that the signal processing and evaluating unit (20, 200) comprises a microprocessor.

**Revendications**

1. Procédé pour guider les têtes de soudage à l'arc d'installations de soudage mécanisées, dans lesquelles la tête de soudage effectue, pendant le soudage, des mouvements, transversalement au cordon de soudure, commandés par une fonction pendulaire et est réglable dans sa position en hauteur et latérale par rapport au cordon de soudure, procédé selon lequel les positions instantanées en hauteur et latérale de la tête de soudage peuvent être asservies en fonction de grandeurs réglantes déterminées à partir du courant de soudage et/ou de la tension de soudage, caractérisé en ce que les valeurs du courant de soudage et/ou de la tension de soudage sont détectées dans des créneaux temporels pouvant être préfixés et qui sont coordonnés au courant et/ou à la tension, les créneaux temporels étant décalés de la valeur du déphasage ($\varphi$) du signal courant et/ou de la tension par rapport à la fonction pendulaire mécanique de la tête de soudage.

2. Procédé selon la revendication 1, caractérisé en ce que la fonction pendulaire et la vitesse de soudage sont constantes et préfixées.

3. Procédé selon la revendication 1, caractérisé en ce que la fonction pendulaire et la vitesse de soudage sont adaptées automatiquement à la largeur instantanée du chanfrein du cordon de soudure par l'exploitation du signal du courant et/ou de la tension.

4. Procédé selon la revendication 1, caractérisé en ce que l'on prévoit un premier créneau temporel servant à la détermination d'une grandeur d'asservissement pour le déplacement en hauteur de la tête de soudage et un second créneau temporel servant à la détermination d'une grandeur d'asservissement pour le déplacement transversal de la tête de soudage.

5. Procédé selon la revendication 4, caractérisé en ce que le premier créneau temporel correspond à un intervalle (t) ayant tout au plus la longueur de la période d'oscillation $(T, t \leq T)$ et que la valeur moyenne déterminée, la valeur maximale ou la valeur minimale du courant et/ou de la tension de soudage est comparée avec une valeur de consigne préfixée et est utilisée pour déterminer la grandeur d'asservissement servant à l'asservissement en hauteur.

6. Procédé selon la revendication 5, caractérisé en ce que le créneau temporel correspond à un intervalle (t) dont la longueur est nettement inférieure à la moitié de la période d'oscillation $(t \leq T/2)$.

7. Procédé selon la revendication 4, caractérisé en ce que le second créneau temporel correspond à un intervalle (t) ayant tout au plus la longueur de la moitié de la période d'oscillation (t ≤ T2), la direction et la valeur de la grandeur d'asservissement pour le déplacement transversal de la tête de soudage étant déterminées par mise en corrélation de la valeur moyenne déterminée, de la valeur maximale ou de la valeur minimale du courant et/ou de la tension de soudage avec le signe du signal dépendant du mouvement oscillant concerné.

8. Procédé selon une des revendications précédentes, caractérisé en ce que les valeurs mesurées actuelles sont contrôlées chaque fois sur leur vraisemblance à l'aide d'au moins une valeur mesurée précédemment et mémorisée temporairement et qu'une grandeur d'asservissement est générée seulement en cas de présence d'au moins deux valeurs mesurées consistantes.

9. Dispositif pour la mise en œuvre du procédé selon la revendication 1 ou une des revendications 2 à 8, comprenant une tête de soudage et des organes d'asservissement et de réglage correspondants, lesquels produisent un déplacement en hauteur de la tête de soudage (5) d'une part et son déplacement latéral, transversalement au cordon de soudure d'autre part, ainsi qu'une unité de préparation et d'exploitation de signaux (20) qui présente au moins une entrée (21) pour le courant et/ou la tension de soudage et des sorties (26, 27) pour des signaux de commande destinés à un moteur de hauteur d'une part, ainsi qu'à un moteur latéral de la tête de soudage (5) d'autre part, caractérisé en ce que des moyens sont coordonnés à l'unité de préparation et d'exploitation de signaux (20) pour détecter le déphasage (φ) du courant et/ou de la tension de soudage par rapport à la fonction pendulaire mécanique en vue de la fixation préalable de créneaux temporels pour la détection du courant et/ou de la tension de soudage.

10. Dispositif selon la revendication 9, caractérisé en ce que l'unité de préparation et d'exploitation de signaux (20) présente une entrée (22) pour le signal de la fonction pendulaire mécanique, en vue de la reconnaissance du signe de ce signal.

11. Dispositif selon la revendication 9, caractérisé en ce que l'unité de préparation et d'exploitation de signaux (20) présente des moyens pour générer la fonction pendulaire.

12. Dispositif selon la revendication 9, caractérisé en ce que l'unité de préparation et d'exploitation de signaux (20, 200) comprend des mémoires (204, 208, 214, 216, 223) et des organes de comparaison (209, 227, 228).

13. Dispositif selon la revendication 9, caractérisé en ce que l'unité de préparation et d'exploitation de signaux (20) est précédée de filtres (12, 17) suivis par des amplis-séparateurs (13, 18) pour les signaux du courant et/ou de la tension de soudage.

14. Dispositif selon la revendication 13, caractérisé en ce que les filtres (12, 17) sont des filtres LC.

15. Dispositif selon la revendication 9, caractérisé en ce que l'unité de préparation et d'exploitation de signaux (20, 200) contient un microprocesseur.

FIG 1

FIG 2

FIG 3